# EUROPEAN PATENT SPECIFICATION

(11) **EP 0 627 034 B1**
(45) Date of publication and mention of the grant of the patent: **03.07.2002**
(21) Application number: 93903110.0
(22) Date of filing: 05.02.1993
(51) Int. Cl.: E03D 3/04, E03D 3/02, F16K 21/04

(54) **MAIN PRESSURE FLUSHER VALVE**
HAUPTDRUCKSPÜLVENTIL
VANNE POUR UNE CONDUITE D'ALIMENTATION EN EAU SOUS PRESSION D'UNE CHASSE D'EAU

(30) Priority: 07.02.1992 AU 75292; 16.09.1992 AU 475992
(43) Date of publication of application: 07.12.1994
(73) Proprietor: Hill, Karen Louise, Brighton, Victoria (AU); Hill, Dianna Adele, Port Melbourne, Victoria (AU)
(72) Inventor: HILL, Stephen, Archibald, Donnybrook, VIC 3064 (AU)
(74) Representative: Marles, Alan David
(86) International application number: AU9300046
(87) International publication number: WO9316240

(56) References cited:
- EP-A- 0 264 638
- DE-A- 2 347 524
- DE-A- 2 609 137
- DE-A- 2 722 889
- DE-C- 430 855
- FR-A- 714 681
- FR-A- 972 332
- FR-A- 1 004 107
- GB-A- 325 114
- GB-A- 368 985
- GB-A- 529 659
- GB-A- 601 969

## Description

### Field of the invention

The invention relates to a mains pressure valve for a mains pressure water system which, upon activation, will deliver a predetermined volume of water.

In this description, where the valve is described in respect of water, it will be understood that other fluid could be used with the valve as well.

### Background

Conventionally, where it is necessary to discharge a predetermined amount of water, a header tank is commonly used with a controlling float valve. Typically, this is required for toilets. The tank is sized to hold a set amount of water. After each discharge the tank needs to be refilled with an attendant delay between flushes. These tanks can be unsightly or otherwise need to be safeguarded against vandalism and it is common to locate them in the partitioning walls or ceilings of the urinal. Further, particularly in large buildings, the combined weight of the many header tanks requires substantial addition to the size of the foundations and framework of the building. In view of the bulk of these tanks, installation costs are increased. Accordingly, there was a need for a mains pressure flushing system which would avoid the need for these types of tanks.

Valves have been proposed to fulfil this need which, upon actuation, allow a predetermined volume of water to flow through the valve before automatically closing or stopping the flow of water. However, such valves to date have usually been large, cumbersome and required specially adapted plumbing (such as larger diameter pipes, pressure regulators and extra valves) for their proper operation. They are also expensive in themselves and expensive to install. Such known valves may also be unable to deliver a sufficient volume of water to flush as required. They permit little adjustment for the volume of water to be delivered and cannot readily provide the well-known "dual flush" capability.

Australian patent number 577932 describes a self close flush valve which is intended to operate at lower than mains pressure as one of several similar valves, each servicing a separate toilet, where the water supply for each is one large header tank. This valve allows the delivery of a fixed volume of water and its particular advantage is stated to be that the volume of water delivered can be easily varied. This valve is, however, not appropriate for connection directly to a mains pressure water system.

That valve has a principal valve which controls the flow of water from the inlet to the outlet by the pressure of water in an inner chamber. By releasing the pressure of water in the inner chamber through a valve contained within the principal valve, the principal valve opens (allowing water to flow from the inlet through to the outlet). While that water flows through to the outlet, some of that water is diverted into the inner chamber which increases the water pressure in the inner chamber and thus causes the principal valve to close again.

Accordingly investigations have been carried out in an attempt to provide an improved mains pressure valve to permit the delivery of a predetermined (although variable) volume of water from a mains pressure water system.

In the prior art, DE-A-2722889 discloses a valve comprising a main chamber having an inlet for fluid and an outlet for fluid, a piston, whose perimeter divides the main chamber into first and second portions, located in the main chamber and moveable into and out of sealing engagement with the outlet of the main chamber and having an internal passageway which communicates between the first portion of the main chamber and the inlet, a port in the first portion of the main chamber which permits fluid to flow therethrough, a valve associated with the port to regulate the flow of fluid through the port, and a discharge chamber downstream of and communicating with the outlet of the main chamber.

According to the present invention, there is provided a mains pressure valve in which there is further provided a non-return valve located downstream of the discharge chamber and communicating therewith, the non-return valve restricting fluid discharged from the outlet of the main chamber and through the non-return valve from flowing backwards through the outlet and into the main chamber, and impeding fluid being discharged from the discharge chamber, and a bypass passageway communicating between the port in the first portion of the main chamber and the discharge chamber upstream of the non-return valve, the piston not being connected to the non-return valve and being movable independently thereof.

In a preferred embodiment of the invention, the valve further comprises an inlet chamber communicating with the inlet of the main chamber. Additionally or alternatively, the valve further comprises a discharge chamber communicating with the outlet of the main chamber.

In another preferred embodiment of the invention, the valve further comprises a bypass passageway communicating between the port in the upper portion of the main chamber and the discharge chamber.

In another preferred form of the invention, a stop tap is located in the inlet chamber and adapted to vary the amount of water flowing through the inlet chamber into the main chamber. Further, the stop tap can be closed completely to prevent any flow of water through the valve. This feature would be particularly relevant for maintenance for example. Typically the stop tap may be raised or lowered to obstruct the flow of water from the mains pressure system into the main chamber. By allowing less water into the main chamber, less water is able to flow through the valve to the outlet during the period the valve is open.

In another preferred embodiment of the invention, the valve can be controlled by an actuation means which can be mechanical or electrical. The actuating means for the delivery of water may preferably be adapted so that there are two predetermined volumes of water which the valve may deliver (one being approximately double the other) to allow for the well known "dual flush" mode of operation. A "dual-flush" operation can be achieved by altering the period of activation of the mechanical means (such as holding the handle down for a short period before releasing it as opposed to a mere push and release) or, in the case of electrical means, by building a delay into the electronic circuitry so that the passage of water through the passageway bypass is allowed to continue for a longer period of time.

In another preferred form of the invention, the valve associated with the port to regulate the flow of fluid through the port may be opened or closed by either mechanical or electrical means. Typical mechanical means may be a handle, lever or push-button and the electrical means would normally incorporate a solenoid which may, for example, be activated by infra-red sensors or electrical buttons/switches.

In another preferred form of the invention, the distance of upward movement of the piston in the main chamber can be controlled by, for example, a spindle projecting into the upper portion of the main chamber. The spindle indirectly controls the volume of water discharged by controlling the time for which the valve is "open" (where the valve permits the flow of water from the inlet to the outlet). The spindle can be lowered into the main chamber to decrease the distance through which the piston may rise which increases the volume of the upper portion of the main chamber. This volume determines the length of time for which the valve is open as water must fill the upper portion to force the piston downward to close the inlet.

In another preferred form of the invention, the discharge chamber is provided with an air-vent. The air-vent allows air into the discharge chamber which enables water remaining in the discharge chamber to drain out. In use, this establishes an "air-break" between the toilet bowl and the valve to assist in the prevention of bacteria moving from the toilet bowl to the mains pressure water system.

With the preferred embodiments of the invention, the volume of water delivered can be controlled over a range sufficiently broad for normal use which is a substantial advance on the valves currently available.

The body and components of the valve may be manufactured from any material which has sufficient strength, resilience and non-corrosive properties to withstand the pressures involved (typically up to 2,000 Pa) although the valve will typically be made from an alloy such as brass.

### Description of Drawings

The invention is now further illustrated with reference to the accompanying drawings in which:
Figure 1 is a cross-section of a valve according to one form of the invention;
Figure 2 is an exploded partial plan view of the valve of figure 1; and
Figure 3 is a cross-section of a valve according to another form of the invention.

In the drawings illustrating various embodiments of the invention, for convenience only like components are given the same numerical reference.

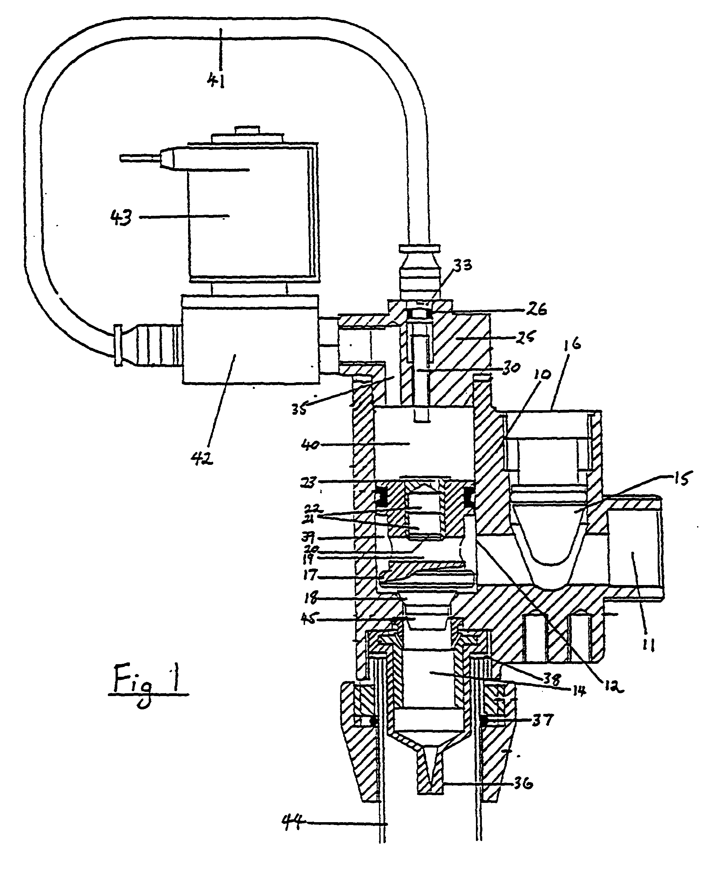

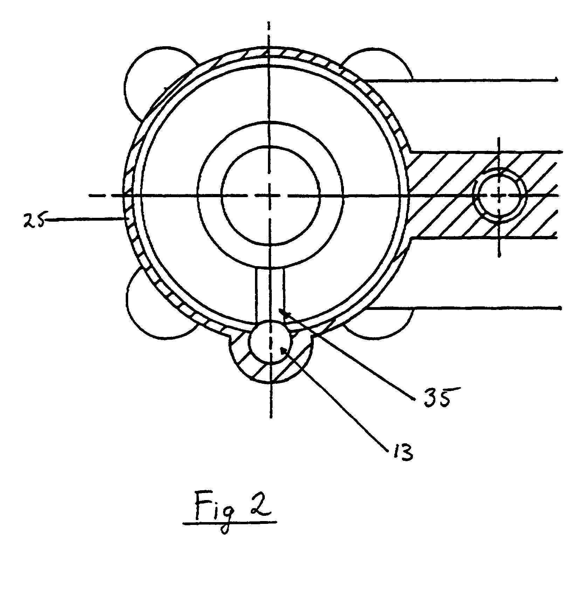

Figures 1 and 2 show a valve having a valve body 10 comprising principally an inlet chamber 11, a main chamber 12, a bypass passageway 13 (only shown in figure 2) and a discharge chamber 14.

Inlet chamber 11 contains a stop tap 15 which can be raised or lowered by turning bolt-head 16. Stop tap 15 may be lowered sufficiently to completely seal the remainder of the valve from the inlet chamber. However it is principally used to adjust the rate of flow of water entering the valve body 10.

The main chamber 12 contains a piston 17. The piston 17 has in its lower portion a rubberised surface 18 which engages with a corresponding seat formed in the valve body 10 to form a seal when the valve is in the closed position. This prevents water flowing from inlet chamber 11 to discharge chamber 14. Piston 17 has a depending choke 45 of slightly smaller diameter than the discharge chamber 14. Piston 17 also has a transverse passageway 19 and an axial passageway 20 which communicate with one another. A filter 20 is located in the axial passageway 20 where it meets with the transverse passageway 19. Two small flow valves 21 and 22 are also located in the axial passageway 20. Channel 23 of axial passageway connects valve 22 to the upper portion 40 of the main chamber 12 and is offset from the main axis of the valve so that it is not blocked by spindle 30 when the valve is open.

Water flows from the inlet chamber 11 into main chamber 12 and into transverse passageway 19. Thereafter, a portion of the water flows into the axial passageway through flow valves 21 and 22, and through channel 23 into the upper portion 40. The flow valves regulate the amount of water permitted to flow into upper portion 40.

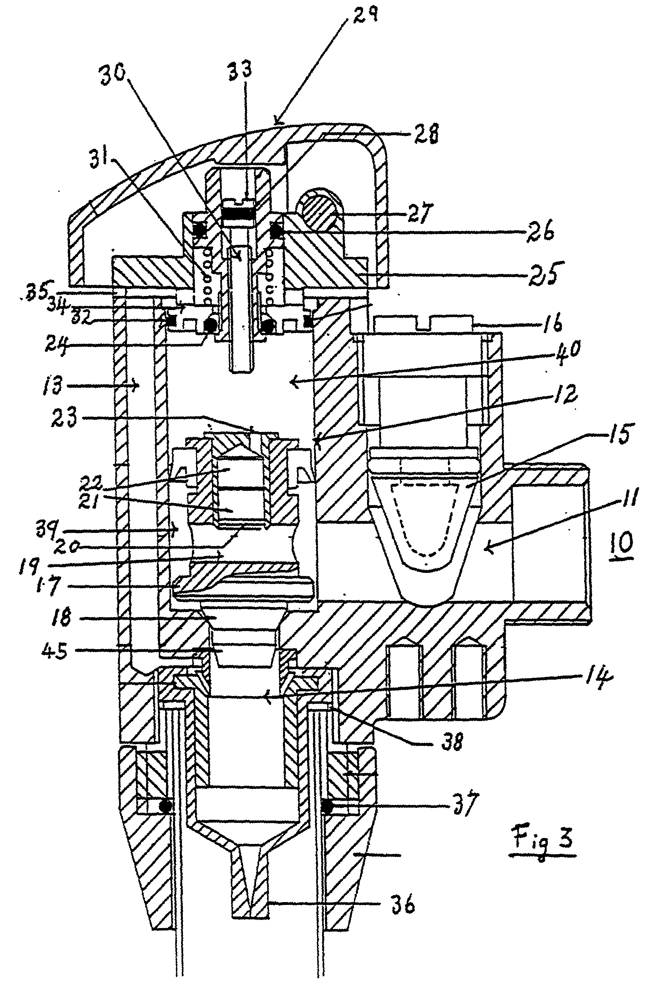

Situated above main chamber 12 is a bonnet 25 which contains a spindle 30 which projects into the main chamber 12. Bonnet 25 is partially located in the main chamber 12. (In the other form of the invention illustrated in figure 3, an "O"-ring 32 is necessary to seal the main chamber 12). The amount of the spindle projecting into the upper portion 40 may be adjusted by means of a bolt head 33. To prevent leakage of water from the bonnet 25, an "O"-ring 24 is located beneath bolt head 33. The spindle 30 projecting into the main chamber 12 controls the extent of upward movement of piston 17 and thus the volume of upper portion 40 when the valve is in the open position. That volume controls the period between actuation of the valve and the cessation of water flow through the valve.

The bonnet 25 also has a port 35 leading from upper portion 40. A valve 42 is connected to the port 35 and also to a tube 41. Valve 42 is controlled by a solenoid unit 43 which is electrically actuated to open valve 42 for a predetermined period of time or times and then close. Tube 41 is connected at its other end to a passageway 13. Passageway 13 is a passageway which communicates with discharge chamber 14. An "O"-ring 37 assists in maintaining the connection between the discharge pipe 44 and the discharge chamber 14.

In the other form of the invention illustrated in figure 3 the valve is actuated by mechanical means. A handle 29 is provided on bonnet 25. Upon depressing handle 29, water is able to flow from upper portion 40 of main chamber 12 through port 35 into the annular cavity around spindle 30 and then flow into passageway 13. The passageway 13 is opposite the inlet chamber 11 in contrast to figures 1 and 2.

With either embodiments when the valve is in the closed position, inlet chamber 11 and main chamber 12 are filled with water. In this state, the total force exerted on the top of the piston 17 by the water contained in the upper portion 40 of the main chamber 12 is greater than the force exerted by the water in the lower portion 39 of the main chamber 12 because the piston 17 has greater surface area exposed to the upper portion 40. In this state, the valve is closed because seal 18 prevents water flowing from inlet chamber 11 to discharge chamber 14.

Upon actuation (by either mechanical or electrical means), water is permitted to flow from upper portion 40 through to port 35 and passageway 13 and into discharge chamber 14. Consequently, the force of the water on the top of piston 17 in the upper portion 40 of the main chamber becomes less than the force exerted by the water in the lower portion 39. This causes piston 17 to rise and permits water to flow from inlet chamber 11 through discharge chamber 14 and through the non-return valve 36, the non-return valve 36 impeding fluid flow to some degree. Water discharged from passageway 13 into discharge chamber 14 is drawn (by a venturi effect by the water flowing from the inlet chamber 11 to discharge chamber 14) down discharge chamber 14. In this state, water from inlet chamber 11 will still flow into channel 19, through filter 20, through flow valves 21 and 22 and then through channel 23 into upper portion 40.

Upon release of the actuating means (which in normal use would be very shortly after actuation), water is no longer able to pass through from upper portion 40 to passageway 13. Thus, water flowing through piston 17 into upper portion 40 will force piston 17 back down to its initial position in the "closed" state. As seal 18 nears its seat in main body 10, the flow of water from inlet chamber 11 to discharge chamber 14 will slowly decrease.

Depending choke 45, slows the downward movement of the piston 12 by further decreasing the water flow-rate through discharge chamber 14. This assists in the seal 18 coming to rest on its corresponding seat gently. A sudden or violent reseating of piston 12 would cause an undesirable noise and may also set up dangerous hydraulic vibrations. The flow of water through the valve finally stops upon seal 18 again forming a seal with its corresponding seat in main body 10 preventing the flow of water from inlet chamber 11 to discharge chamber 14. Air-vent 38 from discharge pipe 44 will enable any remaining water in discharge pipe 44 to drain away. This creates an air-break between the valve and the downstream end of discharge pipe 44.

The means for actuating the valve may be selected to provide alternate flushing options. For example appropriate electronic controls for the solenoid 42 may permit selection of different volumes of water to be discharged. Such electronic controls are well known.

In summary, a compact valve which is straightforward to use and relatively simple to install is provided which can be connected to a mains pressure water system to deliver a predetermined volume of water. The actuating means for the delivery of the water may be electrical or mechanical.

## Claims

1. A mains pressure valve comprising:
(a) a main chamber (12) having an inlet for fluid and an outlet for fluid,
(b) a piston (17), whose perimeter divides the main chamber (12) into first (40) and second (39) portions, located in the main chamber (12) and moveable into and out of sealing engagement with the outlet of the main chamber (12) and having an internal passageway (20,23) which communicates between the first portion (40) of the main chamber (12) and the inlet,
(c) a port (35) in the first portion (40) of the main chamber (12) which permits fluid to flow therethrough,
(d) a valve (42) associated with the port (35) to regulate the flow of fluid through the port,
(e) a discharge chamber (14) downstream of and communicating with the outlet of the main chamber (12),
**characterised in that** there is provided:
(f) a non-return valve (36) located downstream of the discharge chamber (14) and communicating therewith, the non-return valve restricting fluid discharged from the outlet of the main chamber (12) and through the non-return valve (36) from flowing backwards through the outlet and into the main chamber (12), and impeding fluid being discharged from the discharge chamber (14),
(g) a bypass passageway (13) communicating between the port (35) in the first portion (40) of the main chamber and the discharge chamber (14) upstream of the non-return valve (36),
and further **characterised in that** the piston (17) is not connected to the non-return valve (36) and is movable independently thereof.

2. A valve according to claim 1 further comprising an inlet chamber (11) communicating with the inlet of the main chamber (12).

3. A valve according to claim 2 in which the piston (17) includes a flow valve (21,22) located in the internal passageway (20,23) of the piston (17) to regulate the passage of fluid from the inlet of the main chamber (12) to the first portion (40) of the main chamber.

4. A valve according to claim 2 or claim 3 further comprising a stop tap (15) located in the inlet chamber (11) and movable to vary the amount of water flowing through the inlet chamber (11).

5. A valve according to any one of claims 1 to 4 further comprising adjustment means (30,33) to control the distance of upward movement of the piston (17) in the main chamber (12).

6. A valve according to claim 5 wherein the adjustment means comprises a movable spindle (30) projecting into the first portion (40) of the main chamber.

7. A valve according to any one of claims 1 to 6 wherein the discharge chamber (14) includes an air-vent (38).

8. A valve according to any one of claims 1 to 6 wherein the piston (17) further comprises a depending projection (45) of slightly smaller diameter than the discharge chamber (14).

9. A valve according to any one of claims 1 to 8 further comprising mechanical and/or electrical actuation means (29,43) to control fluid flow in and through the valve (42).

## Patentansprüche

1. Netzdruckventil umfassend
(a) eine Hauptkammer (12), die einen Einlaß und einen Auslaß für eine Flüssigkeit aufweist,
(b) einen Kolben (17), der mit seiner Umgrenzung die Hauptkammer (12) in einen ersten Abschnitt (40) und einen zweiten Abschnitt (39) unterteilt, der in der Hauptkammer (12) angeordnet ist und in und außer dichtender Verbindung zu dem Auslaß der Hauptkammer (12) beweglich ist und einen inneren Durchlaß (20, 23) aufweist, der den ersten Abschnitt (40) der Hauptkammer (12) und den Einlaß verbindet,
(c) eine Anschlußöffnung (35) in dem ersten Abschnitt (40) der Hauptkammer (12), die den Durchfluß von Flüssigkeit erlaubt,
(d) ein Ventil (42), das mit der Anschlußöffnung (35) verbunden ist, um den Durchfluß von Flüssigkeit durch die Anschlußöffhung zu regulieren,
(e) eine Auslaßkammer (14), die in Fließrichtung hinter dem Auslaß der Hauptkammer (12) angeordnet ist und mit diesem in Verbindung steht,
**dadurch gekennzeichnet, daß**
(f) ein Rückschlagventil (36), das hinter der Auslaßkammer (14) angeordnet ist und mit dieser in Verbindung steht, wobei das Rückschlagventil einen Rückfluß von Flüssigkeit, die aus dem Auslaß der Hauptkammer (12) und durch das Rückschlagventil (36) entweicht, durch den Auslaß und in die Hauptkammer (12) begrenzt und das verhindert, daß Flüssigkeit aus der Auslaßkammer austreten kann, und
(g) eine Umgehungsleitung (13) vorgesehen ist, die die Anschlußöffnung (35) in dem ersten Abschnitt (40) der Hauptkammer und die Auslaßkammer (14) in Fließrichtung vor dem Rückschlagventil (36) verbindet,
und ferner **dadurch gekennzeichnet, daß** der Kolben (17) nicht mit dem Rückschlagventil (36) verbunden und unabhängig von diesem beweglich ist.

2. Ventil gemäß Anspruch 1, ferner umfassend eine Einlaßkammer (11), die mit dem Einlaß der Hauptkammer (12) in Verbindung steht.

3. Ventil gemäß Anspruch 2, wobei der Kolben (17) ein Durchflußventil (21, 22) umfaßt, das in dem inneren Durchlaß (20, 23) des Kolbens (17) angeordnet ist, um den Flüssigkeitsdurchfluß von dem Einlaß der Hauptkammer (12) zu dem ersten Abschnitt (40) der Hauptkammer zu regulieren.

4. Ventil gemäß Anspruch 2 oder Anspruch 3, ferner umfassend eine Stoppventil (15), das in der Einlaßkammer (11) angeordnet ist und beweglich ist, um die Durchflußmenge von Wasser durch die Einlaßkammer (11) zu regulieren.

5. Ventil gemäß einem der Ansprüche 1 bis 4, ferner umfassend Stellmittel (30, 33), um den Weg der nach oben gerichteten Bewegung des Kolbens (17) in der Hauptkammer (12) zu regeln.

6. Ventil gemäß Anspruch 5, wobei die Stellmittel eine bewegliche Spindel (30) umfassen, die in den ersten Abschnitt (40) der Hauptkammer hineinragt.

7. Ventil gemäß einem der Ansprüche 1 bis 6, wobei die Auslaßkammer (14) eine Lüftungsöffnung (38) umfaßt.

8. Ventil gemäß einem der Ansprüche 1 bis 6, wobei der Kolben (17) ferner einen abwärtsweisenden Vorsprung (45) mit geringfügig kleinerem Durchmesser als der der Auslaßkammer (14) umfaßt.

9. Ventil gemäß einem der Ansprüche 1 bis 8, ferner umfassend mechanische und/oder elektrische Betätigungsmittel (29, 43), um den Flüssigkeitsdurchfluß in dem und durch das Ventil (29, 43) zu regulieren.

## Revendications

1. Soupape de pression de canalisations, comprenant :
a) une chambre principale (12) possédant une entrée de fluide et une sortie de fluide ;
b) un piston (17) dont le périmètre divise la chambre principale (12) en première (40) et seconde (39) parties, situé dans la chambre principale (12) et pouvant se déplacer en et hors engagement d'étanchéité avec la sortie de la chambre principale (12) et possédant un passage interne (20, 23) communiquant entre la première partie (40) de la chambre principale (12) et l'entrée ;
c) un orifice (35) dans la première partie (40) de la chambre principale (12) autorisant un passage du fluide ;
d) une soupape (42) associée à l'orifice (35) pour réguler le débit de fluide à travers l'orifice ;
e) une chambre de décharge (14) en aval et communiquant avec la sortie de la chambre principale (12) ;
**caractérisée en ce qu'**il est prévu :
f) un clapet anti-retour (36) situé en aval de la chambre de décharge (14) et communiquant avec elle, le clapet anti-retour étranglant un débit de retour du fluide déchargé à partir de la sortie de la chambre principale (12) et à travers le clapet anti-retour (36) traversant la sortie et pénétrant dans la chambre principale (12), et empêchant une décharge du fluide de la chambre de décharge (14) ;
g) un passage de dérivation (13) communiquant entre l'orifice (35) de la première partie (40) de la chambre principale (12) et la chambre de décharge (14) en amont du clapet anti-retour (36) ;
et **caractérisée**, de plus, **en ce que** le piston (17) n'est pas connecté au clapet anti-retour (36) et peut se déplacer de façon indépendante de ce dernier.

2. Soupape selon la revendication 1, comprenant de plus une chambre d'entrée (12) communiquant avec l'entrée de la chambre principale (12).

3. Soupape selon la revendication 2, dans laquelle le piston (17) comprend une soupape de réglage de débit (21, 22) positionnée dans le passage interne (20, 23) du piston (17) afin de réguler le passage du fluide de l'entrée de la chambre principale (12) vers la première partie (40) de la chambre principale (12).

4. Soupape selon la revendication 2 ou 3, comprenant, de plus, un robinet d'arrêt (15) situé dans la chambre d'entrée (11) et pouvant se déplacer pour faire varier le volume d'eau traversant la chambre d'entrée (11).

5. Soupape selon l'une quelconque des revendications 1 à 4, comprenant, de plus, un moyen de réglage (30, 33) pour commander la distance de déplacement vers le haut du piston (17) dans la chambre principale (12).

6. Soupape selon la revendication 5, dans laquelle le moyen de réglage comprend une tige mobile (30) se projetant dans la première partie (40) de la chambre principale (12).

7. Soupape selon l'une quelconque des revendications 1 à 6, dans laquelle la chambre de décharge (14) comprend un évent d'air (38).

8. Soupape selon l'une quelconque des revendications 1 à 6, dans laquelle le piston (17) comprend, de plus, une projection dépendante (45) d'un diamètre légèrement inférieur à celui de la chambre de décharge (14).

9. Soupape selon l'une quelconque des revendications 1 à 8, comprenant, de plus, un moyen d'actionnement mécanique et/ou électrique (29, 43) pour commander le débit de fluide dans et à travers la soupape (42).
